# EUROPÄISCHE PATENTSCHRIFT

(11) **EP 0 955 216 B1**
(45) Veröffentlichungstag und Bekanntmachung des Hinweises auf die Patenterteilung: **01.03.2006**
(21) Anmeldenummer: 99107774.4
(22) Anmeldetag: 20.04.1999
(51) Int. Cl.: B60R 25/00, G07C 9/00, B60R 25/04

(54) **System zur Aktivierung und/oder Deaktivierung einer Sicherheitseinrichtung, insbesondere für ein Kraftfahrzeug**
Activation and/or deactivation system for a security device, in particular for a vehicle
Système d'activation et/ou désactivation d'un dispositif de sécurité, notamment pour un véhicule

(30) Priorität: 08.05.1998 DE 19820610
(43) Veröffentlichungstag der Anmeldung: 10.11.1999
(73) Patentinhaber: SIEMENS AKTIENGESELLSCHAFT, 80333 München (DE)
(72) Erfinder: Bürger, Torsten, 65824 Schwalbach (DE)

(56) Entgegenhaltungen:
- EP-A- 0 787 875
- EP-A- 0 823 520
- WO-A-96/38996
- FR-A- 2 755 460
- US-A- 5 351 269
- US-A- 5 729 199

## Beschreibung

Die Erfindung betrifft ein System zur Aktivierung und/oder Deaktivierung einer Sicherheitseinrichtung, insbesondere für ein Kraftfahrzeug, bei welchem eine aktivierte Sendevorrichtung eine codierte, auf eine Trägerfrequenz aufmodulierte Information an eine Empfängervorrichtung zum Empfangen der codierten Information aussendet, wobei die Empfängervorrichtung die empfangenen Informationen mit einer vorgegebenen codierten Information vergleicht und bei Übereinstimmung dieser Informationen ein Ansteuersignal an die Sicherheitseinrichtung abgibt.

In der FR-2755460-A ist eine Zentralverriegelungsanlage nach dem Oberbegriff des Anspruchs 1 mit einer Fernbedienungseinrichtung für ein Kraftfahrzeug offenbart, wobei die Fernbedienungseinrichtung mit Hochfrequenz-Frequenzmodulation arbeitet und die so genannte Bandspreiz- und Frequenzsprungtechnik anwendet. Dabei wird ein für die Übertragung zwischen Sender und Empfänger zur Verfügung stehendes Frequenzband in einzelne Unterfrequenzbänder unterteilt, wobei ein Unterfrequenzband jeweils eine Trägerfrequenz f und die Frequenzmodulation mit f ± Δf umfasst. Während der Übertragung von Informationen zwischen Sender und Empfänger wird nach einem Zeitalgorithmus zwischen den einzelnen Unterfrequenzbändern umgeschaltet.

Aus der gattungsgemäße WO 92/18732 ist eine Vorrichtung zum Betreiben einer Türverriegelungs- und/oder Alarmanlage bekannt, bei welcher vom Nutzer ein beweglicher Sender getragen wird, in welchem eine codierte Information zur Aktivierung bzw. Deaktivierung der genannten Sicherheitseinrichtungen abgelegt ist. Im Kraftfahrzeug ist eine Empfängereinrichtung angeordnet, welche das vom Sender drahtlos ausgesandte Hochfrequenzsignal empfängt und mit einer in ihm abgespeicherten Sollcodierung vergleicht. Bei Übereinstimmung dieser Informationen wird ein Signal an die Türverriegelungs- und/oder Alarmanlage ausgegeben.

Das Sendersignal wird nur dann ausgesendet, wenn die den Sender tragende Person in einem vorgegebenen Abstand zum Kraftfahrzeug steht, welcher innerhalb der Reichweite des Senders liegt.

Der Sender wird dabei durch ein Signal des Empfängers ohne manuelles Eingreifen des Nutzers aktiviert. Bei der verwendeten hochfrequenten Funkverbindung ist die Information auf eine Trägerfrequenz aufmoduliert, welche im Megahertz- oder Gigahertzbereich liegt.

Eine unberechtigte Benutzung des Fahrzeuges soll dadurch verhindert werden, dass durch den Nutzer der Sender durch Tastendruck aktiviert wird, wenn zufällig von dem berechtigten Nutzer eine unberechtigte Nutzung des Fahrzeuges bemerkt wird. Aufgrund dieser Aktivierung erfolgt eine fernbediente Abschaltung des Antriebs des Kraftfahrzeuges.

Die fortgeschrittenen Telekommunikationsmöglichkeiten machen es aber möglich, unbemerkt vom Fahrzeugbesitzer auch über größere Strecken den Identifikationscode berührungslos abzufragen und an das Kraftfahrzeug zu übertragen, ohne dass der Fahrzeugbesitzer etwas davon merkt.

Der Erfindung liegt somit die Aufgabe zugrunde, eine Einrichtung zur Aktivierung und/oder Deaktivierung einer Sicherheitseinrichtung für ein Kraftfahrzeug anzugeben, bei welcher trotz berührungsloser Abfrage des Identifikationsgebers eine berechtigende Zugangsinformation nicht erlangt werden kann.

Erfindungsgemäß wird die Aufgabe dadurch gelöst, dass, nachdem die codierte Information durch Amplitudenmodulation auf die Trägerfrequenz aufmoduliert worden ist, die Bandbreite der Trägerfrequenz in einer Einrichtung zur Frequenzbandverbreiterung der Sendevorrichtung durch zusätzliche Modulation vergrößert wird und die so gewandelte Information von der Sendevorrichtung ausgesendet und von der Empfängereinrichtung empfangen und vor dem Vergleich der Informationen in einer Einrichtung zur Frequenzbandeinengung der Empfängereinrichtung auf die ursprüngliche Trägerfrequenzbandbreite zurückgeführt wird, wobei die Einrichtung zur Frequenzbandverbreiterung und die Einrichtung zur Frequenzbandeinengung je einen Spreizsignalgeber zur Veränderung der Bandbreite der Trägerfrequenz der codierten Information mittels Amplituden- oder Phasenmodulation aufweisen und das von beiden Spreizsignalgebern abgegebene Spreizsignal identisch ist.

Der Vorteil der Erfindung besteht darin, dass ein Abhören des codierten Signales erschwert wird, indem bei der angewandte Frequenzspreizung eine zusätzlich vorgenommene Modulation die im Übertragungsweg belegte Bandbreite gegenüber der Signalbandbreite wesentlich erhöht.

Dabei wird gleichzeitig die Leistung des übertragenen Signals herabgesetzt. Durch die Herabsetzung der Sendeleistung wird das übertragene Signal gleichzeitig unanfällig gegen Störsender. Auf diese Art und Weise wird die Betriebssicherheit der Übertragungsstrecke erhöht, da ein potentieller Abfrager nur einen Teil des Frequenzspektrums und somit nur eine unvollständig codierte Information erhält.

Dadurch dass die Einrichtung zur Frequenzbandverbreiterung und die Einrichtung zur Frequenzbandeinengung ein identisches Spreizsignal abgeben, wird sichergestellt, dass das demodulierte empfangene Signal dieselbe Bandbreite aufweist, wie das ursprünglich vom Sender erzeugte Sicherheitssignal.

Bei einem System, welches mindestens zwei Sendeeinrichtungen aufweist, besitzt der Spreizsignalgeber der ersten Sendeeinrichtung ein anderes Spreizsignal als der Spreizsignalgeberder zweiten Sendeeinrichtung, wobei die Einrichtung zur Frequenzeinengung der Empfängereinrichtung mit zwei Spreizsig nalgebern zur Demodulation der von beiden Sendeeinrichtungen ausgesandten codierten Informationen verbunden ist.

Somit können auch Systeme, die mehrere berechtigte Sender zulassen, zuverlässig durch die Empfängereinrichtung aufgrund der unterschiedlichen Spreizsignale unterschieden werden. Dies gilt insbesondere auch für den Fall, dass von beiden Sendern gleichzeitig eine Übertragung der codierten Information erfolgt, was bislang zu einer Funktionsunfähigkeit der Emp- fängereinrichtung und somit zur Anfälligkeit des Sicherheitssystems führte (Antikollision).

Insbesondere wird durch diese Anordnung eine gegenseitige Beeinflussung verschiedener Fahrzeuge verhindert, welche mit dem gleichen Sicherheitssystem ausgerüstet sind.

Bevorzugt werden für eine solche Frequenzspreizung rauschähnliche Signale, um eine möglichst gleichmäßige Verteilung der Code genutzt. Solche digitalen Signale sind einfach in einem Codegenerator zu erzeugen.

In einer Ausgestaltung erfolgt die Aktivierung der Sendeeinrichtung durch ein von der Empfängereinrichtung ausgesandtes Startsignal. Durch dieses Startsignal wird sichergestellt, daß der Nutzer auch wirklich beabsichtigt, das Kraftfahrzeug in Betrieb zu nehmen.

Vorteilhafterweise erfolgt die Auslösung des Startsignales durch eine Steuereinrichtung der Empfängereinrichtung dann, wenn ein an der Außenhaut oder einem Türgriff des Kraftfahrzeuges angeordneter Drucksensor ein Signal liefert, nachdem der Nutzer den Türgriff betätigt hat.

Die Erfindung läßt zahlreiche Ausführungsformen zu. Eine davon soll anhand der in der Zeichnung dargestellten Figuren näher erläutert werden.

Es zeigt:

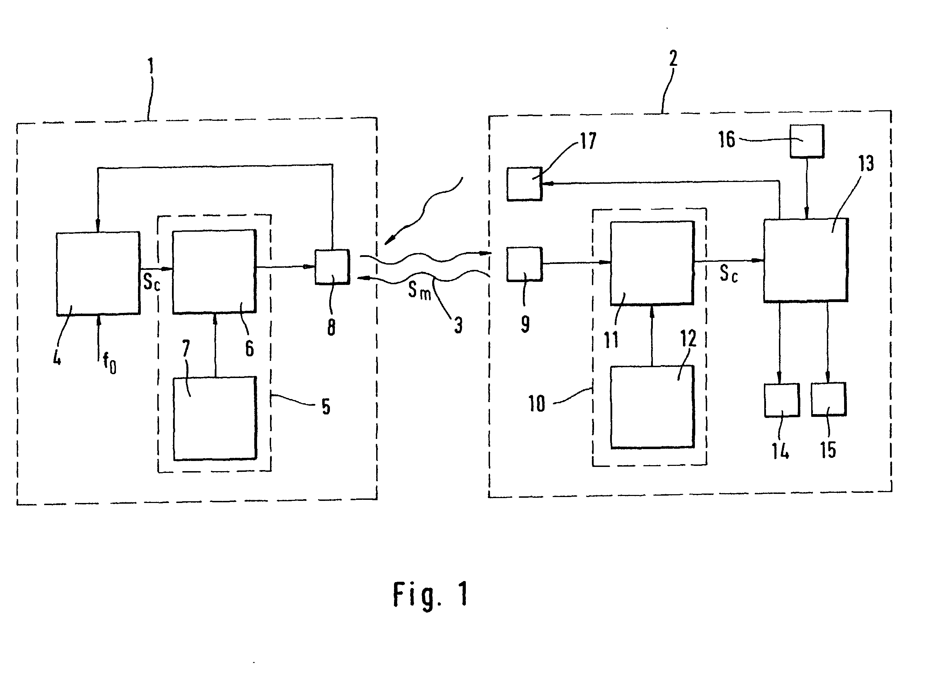

- Figur 1:: erste erfindungsgemäße Lösung
- Figur 2:: Bandbreitenverteilung
- Figur 3:: zweite erfindungsgemäße Lösung

Bei den heute in der Entwicklung befindlichen Fahrzeug-, Zugangs- und Fahrberechtigungssystemen wird durch eine berührungslose Abfrage eines Identifikationsgebers das Öffnen und das Starten eines Fahrzeuges wesentlich komfortabler gestaltet. Der Identifikationsgeber kann dabei beliebig am Körper (z.B. in einer Hosen- oder Manteltasche) getragen werden und muß nicht explizit bedient werden.

Eine Sicherheitseinrichtung, wie sie in einem Kraftfahrzeug angewendet wird, besteht dabei aus einem tragbaren Sender 1 und einer Empfangseinrichtung 2, welche in einem nicht weiter dargestellten Kraftfahrzeug fest installiert ist. Zwischen dem Sender 1 und der Empfangseinrichtung 2 werden berührungslos hochfrequente Funksignale 3 ausgetauscht.

Der Sender 1 besteht dabei aus einem Sicherheitscodegeber 4, in welchem die codierte Information auf eine Trägerfrequenz f₀ von ungefähr 400 MHz aufmoduliert wird. Die so erzeugte Sicherheitsinformation wird an eine Einrichtung zur Frequenzbandverbreiterung 5 weitergeleitet. Diese Einrichtung 5 enthält einen Trägerfrequenzmodulator 6, welchem von einem Spreizcodegeber 7 der Spreizcode zur Verbreiterung der Bandbreite der Trägerfrequenz f₀ zugeführt wird. Das so umgewandelte Signal wird an eine Sende-*j* Empfangseinrichtung 8, welche im Falle der übertragenen Funksignale als Antenne ausgebildet ist, weitergeleitet. Eine ebenfalls als Antenne ausgebildete Empfangseinrichtung 9 der Empfängereinrichtung 2 empfängt das Signal und leitet es an eine Einrichtung zur Frequenzbandeinengung 10 weiter.

Diese Einrichtung zur Frequenzbandeinengung 10 enthält einen Trägerfrequenzdemodulator 11, dem von einem Spreizcodegeber 12 derselbe Spreizcode zugeführt wird, welcher auch im Spreizcodegeber 7 des Senders 1 enthalten ist. Das so rückmodulierte Signal wird an ein Steuergerät 13 des Kraftfahrzeuges geführt, welches das Sicherheitssignal mit einem in ihm gespeicherten Sollsignal vergleicht. Bei Übereinstimmung dieser Informationen gibt das Steuergerät 13 entweder ein Ansteuersignal an die Zentralverriegelung 14 des Fahrzeuges zum Öffnen bzw. Verschließen der Fahrzeugtüren und/oder an eine Wegfahrsperre 15 zur Aktivierung bzw. Deaktivierung des Antriebes aus.

Um den Sicherheitsgrad der Einrichtung zu erhöhen, wird von einem Drucksensor 16, welcher beispielsweise am Türgriff angeordnet ist, ein Signal an das Steuergerät 13 abgegeben, wenn der Nutzer diesen Türgriff betätigt.

Empfängt das Steuergerät 13 das Signal des Drucksensors 16 generiert es ein Startsignal, welches direkt auf eine zweite als Sendeeinrichtung wirkende Antenne17 der Empfangseinrichtung 2 geleitet wird. Auch dieses Startignal wird zur Antenne 8 des Senders 1 als Langwellensignal (challange) übertragen. Das von der Antenne 8 empfangene Startsignal wird direkt an den Sicherheitscodegeber 4 geleitet und dieser erzeugt aufgrund dieses Signales in der beschriebenen Art und Weise den Sicherheitscode. (response)

Die Energieversorgung des Senders 1 kann dabei durch eine Batterie erfolgen, welche im Sender positioniert ist und die durch das Startsignal aktiviert wird. Es ist aber auch vorstellbar, daß die Senderenergie induktiv von der Empfängereinrichtung 2 an den Sender 1 übertragen wird, wenn sich der Sender 1 innerhalb der Reichweite (1,5 m ) der Antenne der Empfangseinrichtung des Fahrzeuges befindet.

Im Weiteren soll noch einmal näher auf die breitbandige Übertragung des Sicherheitssignales eingegangen werden.

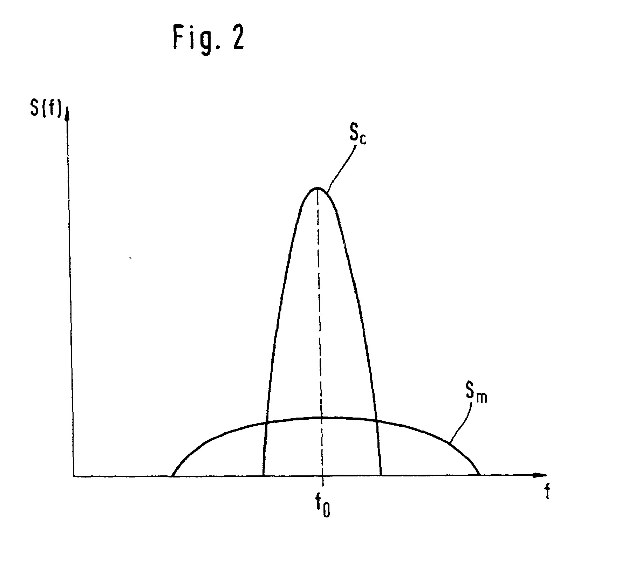

Zur Übertragung frequenzgespreizter Signale wird das vom Sicherheitscodegeber 4 erzeugte Sicherheitscodesignal S_{c} zunächst einem Träger der Frequenz f₀ in Form der Amplitudenmodulation aufmoduliert. Danach erfolgt eine zusätzliche Modulation zur Frequenzspreizung der Trägerfrequenz f₀ in der Einrichtung zur Frequenzbandverbreiterung 5. Dies kann als Amplituden- oder Phasenmodulation erfolgen. Als modulierendes Signal zur Frequenzspreizung wird ein digitales Signal genutzt, welches vom Spreizcodegeber 7 bereitgestellt wird. Dabei beträgt die Bandbreite des gespreizten Signales Sₘ ein Mehrfaches der Bandbreite des Sicherheitssodesignales Sc. Die spektrale Verteilung der Signale ist in der Figur 2 dargestellt. Die im Übertragungskanal belegte Bandbreite des gespreizten Signales Sₘ ist dabei wesentlich größer als die Signalbandbreite des Sicherheitscodesignales S_{c}. Die Leistungsverteilung der Bandbreite des HF-Signals wird dabei durch die Eigenschaften des Spreizcodes bestimmt.

Zur Rückgewinnung des Sicherheitssignales S_{c} aus dem gespreizten Signal wird dieses in der Empfängereinrichtung 2 in der Einrichtung zur Frequenzbandeinengung 10 mit dem zur Frequenzbandverbreiterung benutzten Code korreliert, welcher von dem Spreizcodegeber 12 an den Trägerfrequenzdemodulator 11 abgegeben wird. Hierbei wird der in der Empfängereinrichtung 2 erzeugte Spreizcode phasenrichtig auf den Empfangscode synchronisiert und mit dem Empfangssignal multipliziert. Das über den Frequenzbereich des HF-Signales verteilte Signal wird damit wieder auf die ursprüngliche Bandbreite komprimiert.
Dem übertragenen Signal überlagerte Störungen werden dagegen spektral gespreizt und durch das nachfolgende Bandpassfilter in ihrer Amplitude entsprechend dem Bandbreitenverhältnis reduziert.

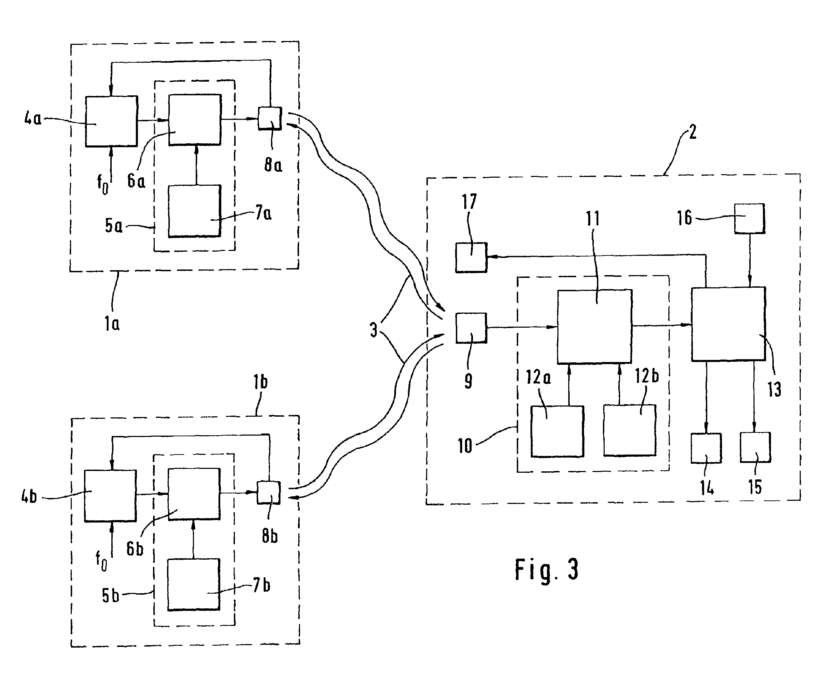

In Figur 3 ist eine erfindungsgemäße Einrichtung mit zwei Sendern 1a, 1b dargestellt.
Die Sender 1a, 1b haben einen identischen Aufbau und unterscheiden sich lediglich dadurch, daß der Spreizcodegeber 7a des Senders 1a einen anderen Spreizcode zur Verfügung stellt als der Spreizcodegeber 7b des Senders 1b.

Die Empfangseinrichtung 2 weist zwei Spreizcodegeber 12a, 12b auf, welche beide mit dem Trägerfrequenzdemodulator 11 verbunden sind. Die Empfangseinrichtung ist somit in der Lage gleichzeitig die von beiden Sendern 1a, 1b ausgesandten Signale zu verarbeiten.

## Patentansprüche

1. System zur Aktivierung und/oder Deaktivierung einer Sicherheitseinrichtung für ein Kraftfahrzeug, bei welchem eine aktivierte Sendevorrichtung eine codierte, auf eine hochfrequente Trägerfrequenz aufmodulierte Information an eine Empfängervorrichtung zum Empfang der codierten Information aussendet, wobei die Empfängervorrichtung die empfangene Information mit einer vorgegebenen codierten Information vergleicht und bei Übereinstimmung dieser Informationen ein Ansteuersignal an die Sicherheitseinrichtung abgibt, **dadurch gekennzeichnet, dass**, nachdem die codierte Information durch Amplitudenmodulation auf die Trägerfrequenz aufmoduliert worden ist, die Bandbreite der Trägerfrequenz (f₀) in einer Einrichtung zur Frequenzbandverbreiterung (5) der Sendevorrichtung (1) durch zusätzliche Modulation vergrößert wird und die so gewandelte Information von der Sendevorrichtung (1) ausgesendet und von der Empfängereinrichtung (2) empfangen und vor dem Vergleich der Informationen in einer Einrichtung zur Frequenzbandeinengung (10) der Empfängereinrichtung (2) auf die ursprüngliche Trägerfrequenzbandbreite zurückgeführt wird, wobei die Einrichtung zur Frequenzbandverbreiterung (5) und die Einrichtung zur Frequenzbandeinengung (10) je einen Spreizsignalgeber (7; 12) zur Veränderung der Bandbreite der Trägerfrequenz (f₀) der codierten Information mittels Amplituden- oder Phasenmodulation aufweisen und das von beiden Spreizsignalgebern (7; 12) abgegebene Spreizsignal identisch ist.

2. System nach Anspruch 1, **dadurch gekennzeichnet, dass** mindestens zwei identisch aufgebaute Sendeeinrichtungen (1) vorhanden sind, wobei der Spreizsignalgeber (7a) der ersten Sendeeinrichtung (1a) ein anderes Spreizsignal abgibt als der Spreizsignalgeber (7b) der zweiten Sendeeinrichtung (7b), wobei die Empfängereinrichtung (2) zwei Spreizsignalgeber (12a, 12b) zur Demodulation der von beiden Sendeeinrichtungen (1a, 1b) ausgesandten codierten Information aufweist.

3. System nach Anspruch 1 oder 2, **dadurch gekennzeichnet, dass** das Spreizsignal ein digitaler Code ist, welcher von dem Spreizsignalgeber (7) erzeugt wird.

4. System nach Anspruch 1, **dadurch gekennzeichnet, dass** die Aktivierung der Sendeeinrichtung (1) durch ein von der Empfängereinrichtung (2) ausgesandtes Startsignal erfolgt.

5. System nach Anspruch 4, **dadurch gekennzeichnet, dass** das Startsignal durch eine Steuereinrichtung (13) in Abhängigkeit eines von einem Drucksensor (16) gelieferten Signals ausgelöst wird.

## Claims

1. System for activating and/or deactivating a security facility for a motor vehicle, in which an activated transmitter device transmits a coded information item modulated to a high-frequency carrier frequency to a receiver device for receiving the coded information item, the receiver device comparing the received information item with a predetermined coded information item and transmitting a triggering signal to the security facility when these information items correspond to one another, **characterized in that**, after the coded information item has been modulated to the carrier frequency by amplitude modulation, the bandwidth of the carrier frequency (f₀) of the coded information item is enlarged by additional modulation in a device for broadening the frequency band (5), belonging to the transmitter device (1), and the information item thus converted is transmitted by the transmitter device (1) and received by the receiver device (2) and, before the comparison of the information items, is restored to the original carrier frequency bandwidth in a device for narrowing the frequency band (10), belonging to the receiver device (2) the device for broadening the frequency band (5) and the device for narrowing the frequency band (10) each having a spreading-signal generator (7; 12) for modifying the bandwidth of the carrier frequency (f₀) of the coded information item by means of amplitude or phase modulation and the spreading signal transmitted by the two spreading-signal generators (7; 12) being identical.

2. System according to Claim 1, **characterized in that** there are at least two identically designed transmitter devices (1), the spreading-signal generator (7a) of the first transmitter device (1a) transmitting a spreading signal different from that of the spreading-signal generator (7b) of the second transmitter device (7b), and the receiver device (2) having two spreading-signal generators (12a, 12b) for demodulating the coded information item transmitted by the two transmitter devices (1a, 1b).

3. System according to Claim 1 or 2, **characterized in that** the spreading signal is a digital code which is generated by the spreading-signal generator (7).

4. System according to Claim 1, **characterized in that** the transmitter device (1) is activated by a starting signal transmitted by the receiver device (2).

5. The system according to Claim 4, **characterized in that** the starting signal is triggered by a control device (13) as a function of a signal delivered by a pressure sensor (16).

## Revendications

1. Système permettant d'activer et / ou de désactiver un dispositif de sécurité et destiné à un véhicule automobile, dans lequel un dispositif émetteur activé envoie une information codée modulée sur une fréquence porteuse à haute fréquence à un dispositif récepteur destiné à recevoir l'information codée, où le dispositif récepteur compare l'information reçue à une information codée donnée et, dans le cas de la concordance de ces informations, délivre un signal de commande au dispositif de sécurité, **caractérisé par le fait que**, une fois que l'information codée a été modulée par une modulation d'amplitude sur la fréquence porteuse, la largeur de bande de la fréquence porteuse (f₀) est augmentée, dans un dispositif (5) destiné à l'élargissement de la bande de fréquence faisant partie du dispositif émetteur (1), par une modulation supplémentaire et l'information ainsi convertie est émise par le dispositif émetteur (1), puis reçue par le dispositif récepteur (2) et, avant la comparaison des informations, est ramenée, dans un dispositif (10) destiné au rétrécissement de la largeur de la bande faisant partie du dispositif récepteur (2), à la largeur de bande initiale de la fréquence porteuse, le dispositif (5) destiné à l'élargissement de la bande de fréquence et le dispositif (10) destiné au rétrécissement de la largeur de la bande comportant chacun un générateur (7; 12) de signal d'étalement pour la modification de la largeur de la bande de la fréquence porteuse (f₀) de l'information codée au moyen d'une modulation d'amplitude ou d'une modulation de phase et le signal d'étalement délivré par les deux générateurs (7; 12) de signal d'étalement étant identique.

2. Système selon la revendication 1 **caractérisé par le fait qu'**il y a au moins deux dispositifs émetteurs (1) constitués d'une façon identique, le générateur (7a) de signal d'étalement du premier dispositif émetteur (1a) délivrant un autre signal d'étalement que le générateur (7b) de signal d'étalement du deuxième dispositif émetteur (1b) et le dispositif récepteur (2) comportant deux générateurs (12a, 12b) de signal d'étalement pour la démodulation de l'information codée envoyée par les deux dispositifs émetteurs (1a, 1b).

3. Système selon la revendication 1 ou 2 **caractérisé par le fait que** le signal d'étalement est un code numérique généré par le générateur (7) de signal d'étalement.

4. Système selon la revendication 1 **caractérisé par le fait que** l'activation du dispositif émetteur (1) se fait par un signal d'initialisation envoyé par le dispositif récepteur (2).

5. Système selon la revendication 4 **caractérisé par le fait que** le signal d'initialisation est déclenché par un dispositif de commande (13) en fonction d'un signal délivré par un capteur de pression (16).
